# EUROPEAN PATENT SPECIFICATION

(11) **EP 0 957 447 B1**
(45) Date of publication and mention of the grant of the patent: **31.10.2007**
(21) Application number: 99109615.7
(22) Date of filing: 14.05.1999
(51) Int. Cl.: G06K 15/00

(54) **Control method of saving data from volatile to nonvolatile memory in a printer**
Steuerungsverfahren zur Datensicherung aus einem flüchtigen in einen nichtflüchtigen Speicher in einem Drucker
Méthode de controle de sauvegarde de données d'un mémoire volatile dans une mémoire non volatile dans une imprimante

(30) Priority: 14.05.1998 JP 13207298
(43) Date of publication of application: 17.11.1999
(73) Proprietor: Seiko Epson Corporation, Shinjuku-ku Tokyo 163-0811 (JP)
(72) Inventor: Teradaira, Mitsuaki, Suwa-shi, Nagano-ken 392-8502 (JP)
(74) Representative: Hoffmann, Eckart

(56) References cited:
- EP-A- 0 345 060
- US-A- 5 479 467

## Description

The present invention relates to a printer having a nonvolatile memory and a volatile memory, both for storing information indicative of the operating condition of the printer. During printer operation, the information is initially copied from the nonvolatile memory to the volatile memory. The information in the volatile memory is then used for printer control and is updated whenever required. The updated information is saved to the nonvolatile memory. The invention also relates to a control method of writing of the updated information back into the nonvolatile memory.

Correct printer operation requires certain information about the operating conditions of the printer, i.e., status information, such as the remaining ink quantity and the last head cleaning time (if it is an ink jet printer), the print head location, and how much roll paper remains (if the printer is one that prints on roll paper). To explain "head cleaning time", it is well known that ink jet printers, which print by ejecting ink from nozzles of an ink jet head onto a printing medium, require regular maintenance, that is, cleaning of the nozzles, in order to sustain reliable operation. Such regular cleaning is needed to prevent problems such as clogged nozzles resulting from ink drying and becoming viscous inside the nozzles. This cleaning process is generally managed based on a timer and is implemented with different levels depending on how much time has passed since the last cleaning operation. Storing, in case of an ink jet printer, the last head cleaning time and level as pieces of the status information mentioned above enables the next cleaning operation to be more appropriately performed.

The status information further includes count values such as the printed character count, the accumulated paper feed amount, and the total operating time.

When the printer stops in the middle of a printing job due to some error or other event like turning off of the power switch, a power failure or a printer reset, the knowledge of such status information becomes particularly desirable so that the operating conditions of the printer at the time when the interruption occurred can be determined and an appropriate process for recovering from the interruption executed. In order to keep such status information even under no-power conditions, printers have commonly comprised an EEPROM (Electrically Erasable Programmable ROM), a flash memory or other type of nonvolatile memory. Printer operating conditions such as those described above (also referred to as "status data" below) are maintained and updated in a volatile memory such as a DRAM, and saved to the nonvolatile memory at a regular saving period. Each time the printer resumes operation, the status data is copied from the nonvolatile memory to the volatile memory.

As noted above, status data is written into the nonvolatile memory at periodic time intervals during the operation of the above-described conventional printer. More specifically, every time a predetermined interval (the saving period), that is measured by an internal timer elapses, any current printer process is interrupted, and the printer CPU is diverted to the process for writing (saving) the data into the nonvolatile memory. The ability of the printer to recover from printing interruptions and restore the operating status to that before the interruption is thus improved by regularly saving the status data to the nonvolatile memory.

It is obviously not possible to predict when an error or other interruption is going to occur. This makes it desirable for the saving period to be as short as possible in order to assure that the most recent condition of the printer before an interruption occurs is saved with the greatest possible accuracy.

When the CPU is executing a printing operation or otherwise processing data and is interrupted by the saving process for writing into the nonvolatile memory, the interrupted CPU task (printing or data processing in this example) stops until the writing into the nonvolatile memory is completed. Printer throughput therefore drops. As the amount of data being tracked and saved to the nonvolatile memory increases, the saving time obviously also increases, and can increase to a level at which the drop in printer throughput can no longer be ignored. It is therefore desirable that the saving time, i.e., the time required for copying data from the volatile memory to the nonvolatile memory, at each saving instance be as short as possible irrespective of the amount of status data to be saved.

Conventional saving methods copy the entire content of the volatile memory into the nonvolatile memory whenever data saving is initiated, regardless of whether all data in the volatile memory have indeed changed since they were last saved. This means that time may be spent for saving data that have not changed and, thus, need not be saved. In addition, nonvolatile memories allow a limited number of write cycles to a particular memory location. Thus, the service life of nonvolatile memories depends upon the number of write cycles they undergo per unit time. This means that when data that has not changed is written to the nonvolatile memory, the limited number of available write cycles is needlessly reduced, and memory service life is potentially shortened.

A printer according to the pre-characterizing portion of claim 1 and a control method according to the pre-characterizing portion of claim 6 are known from US 5,479,467 A. According to this prior art the data in a respective memory area of the volatile memory is copied to the corresponding memory area in the non-volatile memory every predetermind number of increments of that data in the volatile memory.

EP 0 345 060 A discloses an image forming device, e.g., a printer, that counts for each of a plurality of working parts the respective working time. The counters are implemented by means of a RAM. All counted values are copied to a non-volatile memory every predetermind number of updates of any of the counted values.

US patents 4,458,307 and 5,533,190 deal with systems where a part of a volatile memory is saved in a non-volatile memory (such as a hard disk) when a predetermined trigger event (e.g. an imminent loss of operating power) is detected.

An object of the present invention is to shorten the saving time and thereby reduce the effect the saving process has on the normal printer operation. A further object of the present invention is to prevent data from being unnecessarily saved to the nonvolatile memory, and thereby improve the service life of the nonvolatile memory.

These objects are achieved with a printer as claimed in claim 1 and a control method as claimed in claim 6. Preferred embodiments of the invention are subject-matter of the dependent claims.

By logically dividing both the volatile memory and the nonvolatile memory into a number of memory areas and saving the corresponding data groups of different ones of these memory areas in response to different ones of predetermined trigger events, the saving time is shortened and the write frequency for the individual memory areas is reduced so that life time of the nonvolatile memory is improved.

Trigger events are events in response to which data is saved from the volatile memory to the nonvolatile memory. These trigger events preferably include detection of a reset signal from a host computer. In this case, the printer is reset based on this reset signal after data have been saved to the nonvolatile memory. Other trigger events may include events such as: the periodic lapse of a specific time interval (the saving period), turning printer power on and off, and specific control events in printer operation. These specific control events preferably include print head cleaning, ink cartridge replacement, roll paper replacement, and such operating errors as an increase in the print head temperature beyond a threshold value or a disconnection or rupture of the carriage transportation belt. It is to be noted that these specific control events depend on the type of printer to which the invention is applied. Thus, control events like print head cleaning and ink cartridge replacement apply to ink jet printers only.

According to a preferred embodiment of the invention, some or all of data groups corresponding to the memory areas of the volatile memory and the nonvolatile memory are classified into at least a first and a second set of data groups each set including one or more of the data groups. The data group or groups belonging to the first set is or are saved periodically with the saving period. The data group or groups belonging to the second set is or are saved in response to a predetermined one of the control events.

Much of the data to be saved to the nonvolatile memory is updated in the volatile memory when the printer performs a particular control operation when particular control events such as those described above occur. It is therefore possible to minimize damage from data loss by saving those data to the nonvolatile memory after the control event has been completed and the data in the volatile memory updated. By also saving data that is otherwise periodically saved and also restarting the time counter measuring the saving period, an increase in the frequency of data write cycles to the nonvolatile memory can be prevented.

Other objects and attainments together with a fuller understanding of the invention will become apparent and appreciated by referring to the following description of preferred embodiments taken in conjunction with the accompanying drawings, in which:
- Fig. 1: is a typical functional block diagram of a printer according to a preferred embodiment of the present invention;
- Fig. 2: is an example of circuit block diagram suitable for implementing the functions shown in Fig. 1;
- Fig. 3: shows an example of the logical structure of memory areas in the nonvolatile memory and the volatile memory;
- Fig. 4: is a table showing an example of the relationship between data groups and trigger events that trigger saving of the data groups from the volatile memory to the nonvolatile memory;
- Fig. 5: is a flow chart illustrating a general saving process according to the present invention;
- Fig. 6: is a flow chart of a first saving process according to a preferred embodiment of the present invention;
- Fig. 7: is a flow chart of an second saving process according to a preferred embodiment of the present invention; and
- Fig. 8: shows an example of a preferred logical structure of memory areas A5 both in the nonvolatile memory and the volatile memory.

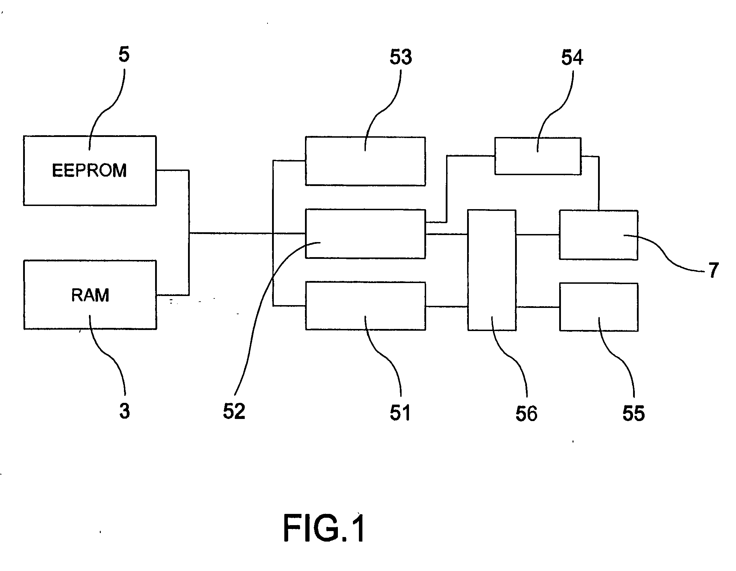

The printer 1 shown in Fig. 1 is - by way of example only - a serial ink jet printer capable of printing to both cut-sheet forms and roll paper. This printer 1 comprises an EEPROM 5 for storing status data, a RAM 3 for temporarily storing status data as it is updated during printer operation, various control means 51 to 56 for controlling the copying (saving) of the status data from the RAM 3 to the EEPROM 5 and from the EEPROM 5 to the RAM 3, and a counter 7.

Both memories, the EEPROM 5 and the RAM 3, (or a respective part of each) are logically divided into a plurality of memory areas for storing status data such those explained above. The status data is in turn divided into a corresponding plurality of data groups and each data group is assigned to a respective one the of memory areas. As will be described in further detail below, the individual data groups are saved at different times.

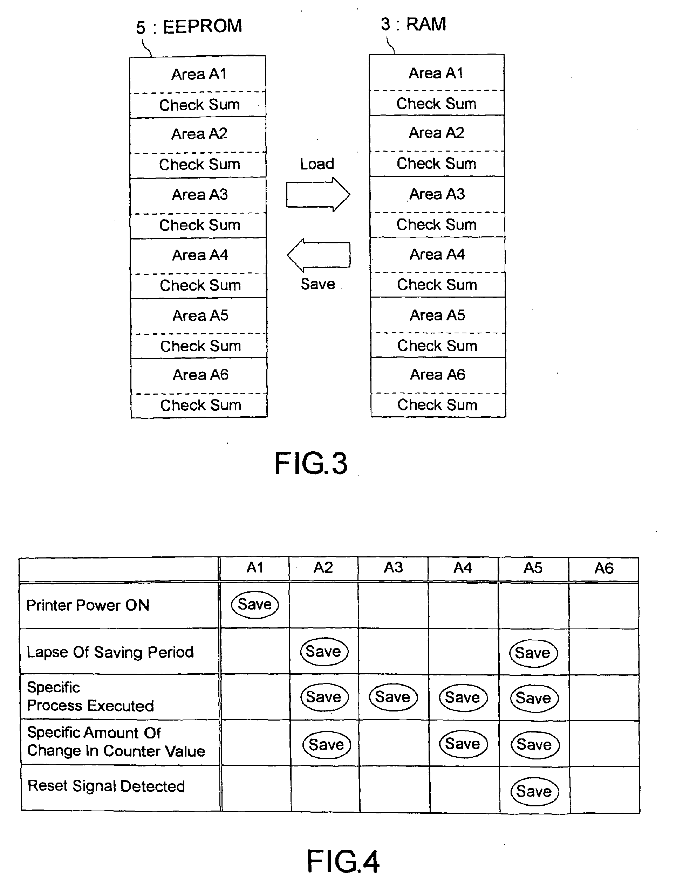

As shown in Fig. 3 and Fig. 4, in this embodiment the memories (the memory parts used for storing status data) are logically divided into six memory areas A1 to A6 each, and the status data are correspondingly grouped into six data groups. These six data groups are preferably classified into a number of sets. Among these are at least a first set of one or more data groups that is or are periodically saved to the nonvolatile memory at a predetermined saving period as counted by counter 7, and a second set of one or more data groups that is or are saved to the nonvolatile memory every time a predetermined control event (or one of multiple specific control events) occurs. To distinguish from the periodic saving of the first set, saving of the second set is also referred to as "event-driven" in this text. Despite this distinction, the term "trigger event" as used in this text includes both the occurrence of a signal from counter 7 indicating lapse of the saving period and triggering the periodic saving, as well as the occurrence of a control event. As will be appreciated from the following discussion, while the first and second sets are different, they may overlap in the sense that one or more data groups may belong to both sets. As will also be appreciated from the following discussion, in the described embodiment there are indeed five different sets of data groups. Since for an understanding of the principle of defining and using different sets of data it should be sufficient to refer to the first and second sets, the remaining sets will not be discussed in further detail below.

When the saving period counted by counter 7 elapses, a controller 56 issues to a first read/write means 51 a command for copying the first set of data groups from RAM 3 to EEPROM 5.

The control events that trigger saving of the second set of data groups include, for example, the print head cleaning. When a print head cleaning event occurs, for example, a monitoring means 55 refers to a timer to determine whether the time that has elapsed since the last time the print head was cleaned exceeds a predetermined length of time. If it does, the controller 56 issues to a second read/write means 52 a command for copying the second set of data groups from RAM 3 to EEPROM 5. A command for copying the first set to EEPROM 5 is also issued at this time so that both the first and second sets of data groups are saved to EEPROM 5.

An initialization means 54 re-initializes counter 7 whenever EEPROM 5 is written by second read/write means 52. Note that when the printer power is turned on, third read/write means 53 loads the data from EEPROM 5 into RAM 3.

It should be further noted that, in the present embodiment, the above-noted first read/write means 51, second read/write means 52, third read/write means 53, initialization means 54, and controller 56 are implemented by means of a program-controlled microprocessor and storage means storing the program code for the respective operations. This storage means could be, for example, a ROM or a temporary storage such as a RAM (including part of RAM 3). The monitoring means 55 is also preferably implemented by a program-controlled microprocessor, a ROM or other storage for storing the program code for the respective operations, a timer, and a sensor (not shown in the figures) for detecting a change in printer operation. Preferably, the microprocessor and ROM or other storage used for implementing first read/write means 51 and others are the same as those used for implementing the monitoring means 55.

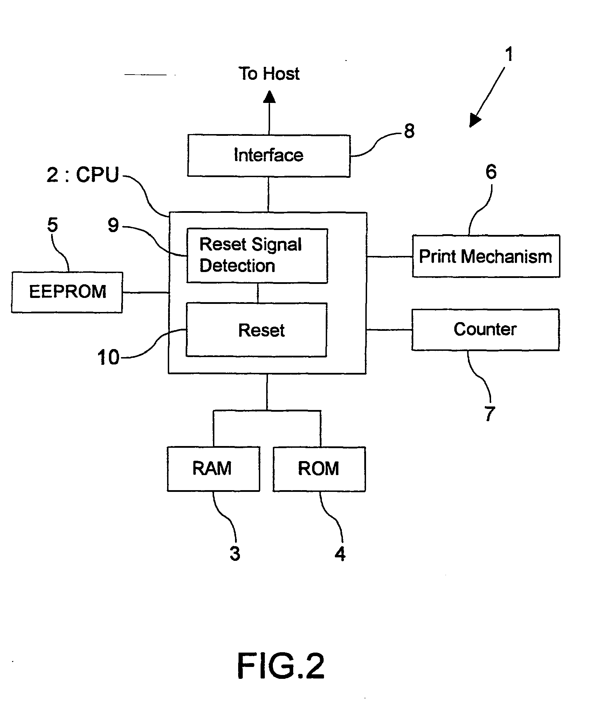

Fig. 2 is a circuit block diagram of a printer according to this first embodiment of the present invention. As shown in Fig. 2, this printer 1 comprises a CPU 2 (representing the microprocessor mentioned above) for controlling the overall printer operation, the RAM 3 as main work memory, a ROM 4 for storing control data and a control program, the EEPROM 5 for storing status data as described above, a print mechanism 6 for printing on a printing medium by means of a print head, the counter 7 for counting the passage of time and an interface 8 for connection to a host computer.

The CPU 2 loads program and control data from ROM 4 and status data from EEPROM 5 into RAM 3 and controls printer operation based on the loaded program and control data in RAM 3. When power to printer 1 is turned on, the printer is initialized based on the loaded data. The printer (CPU 2) then waits for a command from the host.

The printer 1 has various sensors, not shown in the figures, for monitoring the operating conditions of the printer. The status data in RAM 3 which is generated by and in response to these sensors, respectively, is sequentially updated, and in response to specific trigger events described in detail below it is copied and saved to specific memory areas in EEPROM 5. The status data saved to EEPROM 5 is loaded from EEPROM 5 into RAM 3 when the printer 1 is initialized or reset, and is thus used as the initial data for the printer control.

For example, the head cleaning time described above represents the time of the last head cleaning event. The CPU 2 uses this head cleaning time to determine the timing of the start of the next head cleaning event, and initiates head cleaning at that time.

In addition, when a printer error occurs, causing the printer to stop operating in the middle of a print job, for example, the printer 1 is restored to the previous normal operating condition based on the location of the print head read from EEPROM 5 after the printer 1 is reset. The timing of saving data to the EEPROM 5 and the saving procedure itself as well as the copying from the EEPROM 5 to the RAM 3, are controlled by the CPU 2.

The counter 7 measures the elapse of a predetermined saving period based on an internal clock circuit (not shown in the figures). Whenever data is saved to EEPROM 5, the CPU 2 re-starts counter 7 to count said saving period. When this predetermined period elapses (1 hour, for example), the counter 7 outputs a signal notifying the CPU 2 that the counted period has elapsed. In response to this signal the CPU 2 acts to save the above mentioned first set of data groups to EEPROM 5. It goes without saying that the counter 7 may also be implemented by the CPU 2.

The CPU 2 also has a reset signal detection function 9 and a reset function 10. This reset signal detection function 9 detects when a reset signal has been received from the host computer. When a reset signal is detected, the CPU 2 issues a write command for saving at least part of the data in RAM 3 to EEPROM 5. The reset function 10 is a function for resetting the printer, an operation that includes copying all of the data in EEPROM 5 to RAM 3, returning various printer components (such as the print head) to respective initialization positions, and entering a standby state waiting for data from the host. When data saving to EEPROM 5 initiated by a reset signal is completed, the CPU 2 performs the reset function 10. This sequence ensures that data relating to the printer status before the reset are saved to EEPROM 5.

Referring to Figs. 3 and 4, the memory areas of the EEPROM 5 and the RAM 3 in the preferred embodiment will be explained in more detail. Fig. 3 is an illustration of an example of the logical structure of the memory areas in EEPROM 5 and RAM 3 used for storing status data. As mentioned before and shown in the figure, the EEPROM 5 and RAM 3 (or part of them) are logically segmented into six memory areas A1 to A6. Each of the areas in EEPROM 5 corresponds to an area in RAM 3, enabling data to be copied in units of a memory area from RAM 3 to EEPROM 5 and vice versa. As noted above, the status data are also divided into six data groups. These six data groups are each assigned to a respective one of the six memory areas. As a result, data storage is accomplished in units of data group, copying one or a plurality of data groups at a time.

Each of memory areas A1 to A6 includes data area and a checksum area. When data is copied between EEPROM 5 and RAM 3, the checksum of each copied data group is used for error detection. Each time a data group is copied from a source memory area (in EEPROM 5 or RAM 3) to a destination memory area (in RAM 3 or EEPROM 5) the checksum is calculated based on the copied data group in the destination memory area and compared with the checksum stored for that data group in the source or destination memory area.

Default (initialization) values for the status data are stored in ROM 4 or in another memory area (other than memory areas A1 to A6) of EEPROM 5 in Fig. 2. These default values are values suitable to assure normal printer operation. When the checksum comparison explained above reveals a data error for a data group, the status data stored in the related pair of memory areas of RAM 3 and EEPROM 5 are replaced with the default values. This makes it possible to minimize printer operating problems when an error occurs.

Fig. 4 is a table showing the relationship between data groups A1 to A6 and the trigger events upon which the respective data groups are saved to EEPROM 5. One of the first steps in memory control according to the present invention is to select a plurality of "trigger events" at which certain data groups are saved to the respective memory areas. As shown in Fig. 4, these trigger events include in the present embodiment: turning on power to the printer, lapse of the saving period (such as 1 hour), specific printer events (such as print head cleaning, ink cartridge and roll paper replacement, occurrence of a printer operating error), the moment when a counter for tracking specific control information indicates a change of that control information by a predetermined amount (e.g., the count value of a counter for tracking the accumulated drive count of a roll paper cutter reaches a specific value), and detection of a reset signal (including reset signals from the host and a reset signal generated when an abnormal voltage is detected).

As described above, in the present exemplary embodiment of the invention the status data are divided into six data groups according to the trigger events described above, and assigned to the six memory areas shown in Fig. 3. In this preferred embodiment, the following status data are included in the respective data groups (note that the data groups are given the same names A1 to A6 as the corresponding memory areas).

| Data Group/ Memory Area | Status Data |
|---|---|
| A1 | time at which power to the printer is turned on |
| A2 | printed line count since the last print head cleaning event, and total printed line count since printer manufacture |
| A3 | time of the last print head cleaning event, and the cleaning level |
| A4 | cumulative drive count of the roll paper cutter |
| A5 | reset flag, time of the most recent trigger event, ink consumption counter |
| A6 | various complementary data (such as carriage travel distance) |

According to the example of the relation between trigger events and data groups shown in Fig. 4, when the power to printer 1 is turned on, data group A1, i.e. the current time is saved to EEPROM 5, and data groups A2 and A5 are saved periodically with the saving period. When any of the specific control events occurs, data groups A2 to A5 are saved; and when a reset occurs, only data group A5 is saved. Each time a counter for counting particular control information has changed by a predetermined amount or reaches a predetermined value, data groups A4 and A5 are saved. Data group A6 stored in memory area A6 is used, for example, to correct the printing position as a result of variations between specific mechanical components of the printer, and is written prior to shipping from the factory and when the printer is repaired. It will thus be obvious that not all data groups need to be saved at every trigger event shown in Fig. 4.

While the first and the second set of data groups have been referred to above, it is to be noted that, as shown in Fig. 4, in the present embodiment there are three other sets, namely a third set including only data group A1, a fourth set of data groups A2, A4 and A5 and a fifth set of only data group A5.

It should be noted that the data group A5 includes information that is, relative to information of other data groups, important for the printer control, and is therefore more frequently saved. Furthermore, a reset signal is also generated when a power failure or a voltage drop is detected, for example. The data group A5 is therefore saved in response to a rest signal while the other data groups are not saved.

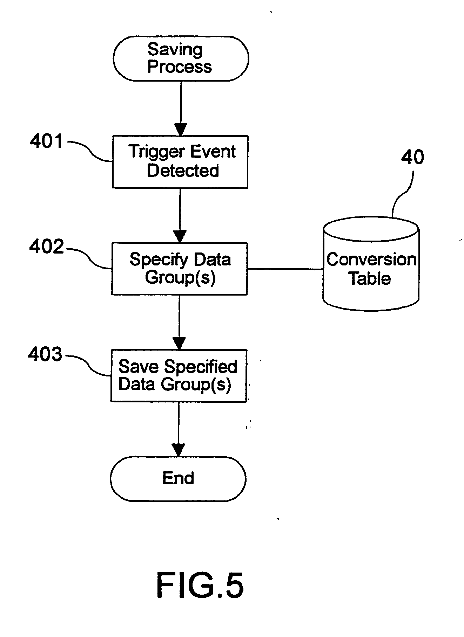

A table 40 (see Fig. 5) corresponding to that shown in Fig. 4 is stored in a memory area of ROM 4 or another memory area of EEPROM 5 and is read when any of the trigger events stored in the table occurs.

Fig. 5 is a flow chart of the saving process by which data is saved to EEPROM 5. This flow chart shows the procedure from when one of the trigger events shown in the table occurs until the data group(s) concerned is (are) copied from RAM 3 to EEPROM 5. When the CPU 2 detects any of the trigger events (step 401), the table 40 is read and used to determine the data group(s) to be saved to EEPROM 5 (step 402). The thus determined data group(s) is (are) then read out from RAM 3 and written to the corresponding area(s) in EEPROM 5 (step 403). As a result, only that data group(s) defined for being saved at a respective trigger event is indeed saved to EEPROM 5 when that trigger event occurs.

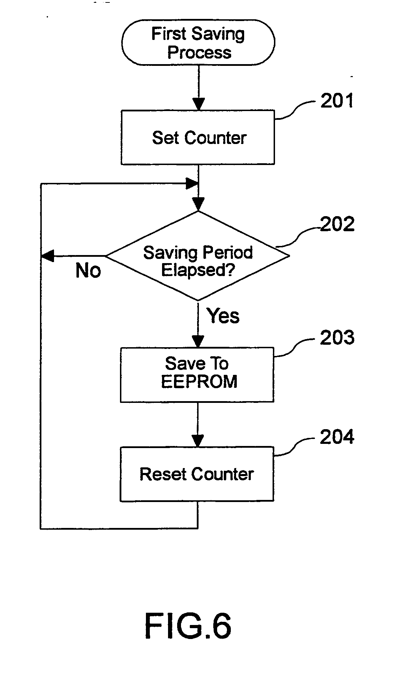

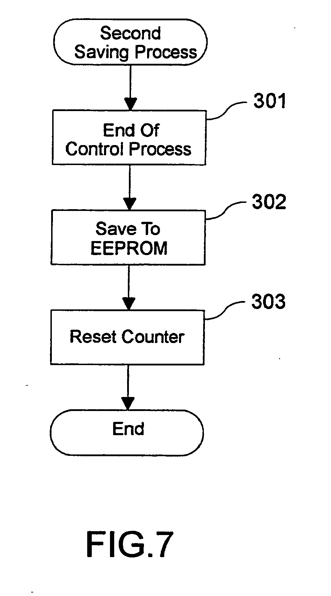

Fig. 6 and Fig. 7 are flow charts illustrating saving processes in a printer 1 according to a preferred embodiment of the present invention. Fig. 6 shows the periodic saving process (first saving process), and Fig. 7 shows the event-driven saving process (second saving process).

Referring to Fig. 6, data stored in EEPROM 5 is loaded into RAM 3 when the printer 1 is activated, and the counter 7 starts counting the saving period (step 201). When this saving period elapses after the counter 7 started counting (step 202), data groups A2 and A5 (forming the first set of data groups) are saved to EEPROM 5 (step 203) as mentioned above. If this interval is 1 hour, for example, these data groups are saved at least once every hour. When the saving of the data to EEPROM 5 is completed, the counter 7 is reset and begins counting the next saving period (the first saving process enters a standby mode in step 204). As a result, the data of data groups A2 and A5 is written to EEPROM 5 every time the predetermined saving period elapses.

As described above, data is also saved to EEPROM 5 at specific selected control events, that is, at trigger events other than that represented by the lapse of the saving period described above. As also noted above, exemplary control events include: print head cleaning, replacement of the ink cartridge or roll paper, and operating errors such as a rise in the print head temperature or disconnection of the carriage transportation belt. In response to such trigger event CPU 2 passes control to the second saving process shown in Fig. 7. More specifically, it is first detected when the control process, if any, related to the control event is completed (step 301), the control information (e.g., count values) that has been updated in RAM 3 by that control process is then saved to EEPROM 5 (step 302). As shown in Fig. 4, data groups A2 to A5 (forming the second set of data groups) are saved at this time. When the saving of data to EEPROM 5 is completed, counter 7 is reset (step 303). Resetting the counter 7 in this step causes the saving period counted in step 202 in Fig. 6 to restart at the completion of the process shown in Fig. 7.

The data group A3 is saved only in step 302 in Fig. 7. On the other hand, data groups A2 and A5 are saved to EEPROM 5 both periodically with the saving period (step 203 in Fig. 6), and together with data groups A3 and A4 when one of the specific control events occurs. Even though this may slightly increase the frequency of writing to the nonvolatile EEPROM, a drop in printer throughput is prevented because the counter 7 is reset in step 303.

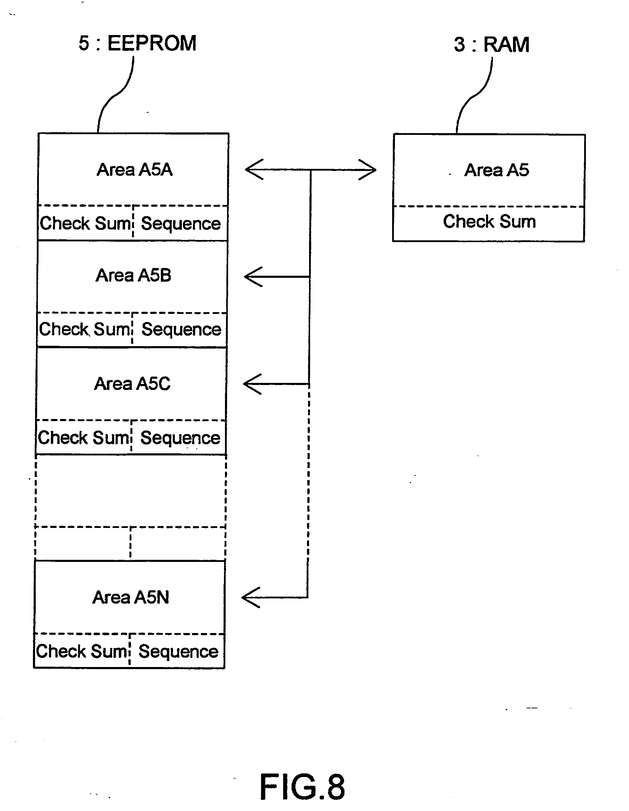

Fig. 8 is an illustration of the logical structure of memory area A5 in EEPROM 5 and RAM 3 according to a preferred embodiment of the invention. As will be understood from the figure, memory area A5 in EEPROM 5 is further divided into a plurality of subareas A5A to A5N. Each of these subareas A5A to A5N includes, in addition to a status data area, a sequence area for storing a sequence value and a checksum area. When data group A5 is saved to EEPROM 5 it is written into a selected one of the subareas. The subareas are sequentially and cyclically selected. The sequence value is used to identify the subarea that holds the most recently saved data.

Referring to Fig. 5, let data group A5 be specified in step 402. In this case, when data group A5 is saved from RAM 3 to EEPROM 5 in step 403, it is written to the subarea next in sequence after the subarea last used. For example, if data group A5 was written to subarea A5A the last time step 403 was executed and data group A5 was specified, data group A5 is written to subarea A5B in the present step 403.

In this exemplary embodiment, a 2-byte area is allocated for the sequence value, enabling codes OO_{H} to FF_{H} to be stored, i.e., the sequence value can assume any value between 0 and 65536. Each time step 403 is executed, the sequence value is increased (since the sequence value changes cyclically it could be decreased instead) and the updated value is written into the sequence area of the respective subarea. For example, if data was written to subarea A5A the last time step 403 was executed and a sequence value of 05 is stored in the sequence area of subarea A5A, a value of 06 is stored in the sequence area of subarea A5B in the present step 403. If the maximum sequence value (65536 in this embodiment) and the number of subareas are chosen to be different, the sequence value that will be stored in the sequence area of a particular subarea will always be different from that that was written into the same sequence area the previous time. Therefore, the sequence value stored in the subarea that holds the most recently saved data, and the sequence value stored in the subarea next in sequence to that subarea will be discontinuous. This discontinuity allows to identify among the subareas that one that holds the most recently saved data as well as those preceding.

When data is to be loaded from EEPROM 5 to memory area A5 of RAM 3 (which is not subdivided), the sequence values stored in subareas A5A to A5N are compared to find the above explained discontinuity, thereby to identify the subarea holding the most recent data and to load the most recent data into the memory area A5 of RAM 3. For example, if the values stored in the sequence areas of subareas A5A, A5B, and A5C are 05, 06, and F8, the status data stored in subarea A5B is the most recent one, and is therefore loaded into memory area A5 of RAM 3.

As shown in Fig. 4, the data group A5 is saved whenever a reset signal is detected, and is usually information that is important for the printer control. This information is also saved in response to other control events, so that the saving frequency for memory area A5 is greater than that of other memory areas. By providing a plurality of subareas in EEPROM 5 so that frequently updated data groups are written sequentially to different memory areas, it is possible to prevent a drop in life time of the EEPROM 5 resulting from a frequent use of a particular part of that memory.

It will also be obvious that by providing a checksum area for storing a checksum as error detection code in each subarea, it is possible, when a data corruption is detected in the most recently saved status data, to scan and locate the second most recently saved status data and check for errors in this data. If there are no errors, the second most recently saved status data can then be loaded into RAM 3.

While the embodiment of the present invention has been described as using an EEPROM as the nonvolatile memory, a flash memory or other type of nonvolatile memory can be alternatively used. The data stored in the nonvolatile memory are of course not limited to that described above. More specifically, data relating to any printer condition can be stored, or only a subset of the above-described status data can be stored. In addition to storing status data, the nonvolatile memory can be used to store other data, including font data and program data.

The invention is also not limited to the trigger events described above. Furthermore, a checksum has been described for error detection, but it will be obvious that other error detection codes, including a parity check code, or even error detection and correction codes can be alternatively used.

## Claims

1. A printer comprising:
nonvolatile memory means (5) having a plurality of memory areas (A1-A6);
volatile memory means (3) having a plurality of memory areas (A1-A6), each of said plurality of memory areas of said volatile memory corresponding to a respective one of said plurality of memory areas of said nonvolatile memory;
control means (56) for detecting the occurrence of a predetermined trigger event indicating a predetermined operation of the printer, for generating a first save command In response to each detected trigger event; and
saving means (51, 52, 54) comprising first read/write means (52) responsive to said first save command for saving a first set of data comprising the data of one or more of the memory areas (A1-A6) of said volatile memory (3) to the corresponding memory areas (A1-A6) of said nonvolatile memory (5);
**characterized in that**
said control means comprises a counter (7) for periodically counting a predetermined saving period, and means for generating a second save command in response to said counter having counted said saving period, and
said saving means comprises second read/write means (51) responsive to said second save command, for saving a second set of data comprising the data of one or more of said memory areas (A1-A6) of said volatile memory (3) to the corresponding memory areas (A1-A6) of said nonvolatile memory (5), wherein said second set of data includes the data of one or more memory areas not included in said first set.

2. The printer as set forth in claim 1, further comprising initialization means for initializing said counter (7) in response to said saving by said second read/write means (51).

3. The printer as set forth in claim 1 or 2, wherein each memory area (A1-A6) comprises a data area for storing data representing printer operating conditions, and a checksum area for storing an error detection code.

4. The printer as set forth in any one of claims 1 to 3, wherein at least one (A5) of said plurality of memory areas (A1-A6) in said nonvolatile memory (5) is divided into a plurality of subareas (A5A - A5N) each subarea comprising a data area for storing data representing printer operating conditions and a sequence area for storing sequence data representing the sequence of use of the subareas.

5. The printer as set forth in claim 4, wherein each subarea (A5A - A5N) further comprises a checksum area for storing an error detection code.

6. A control method for saving data from a volatile memory (3) to a nonvolatile memory (5) in a printer (1), in which the nonvolatile memory means (5) has a plurality of memory areas (A1-A6) and the volatile memory means (3) has a plurality of memory areas (A1-A6), each of said plurality of memory areas of said volatile memory corresponding to a respective one of said plurality of memory areas of said nonvolatile memory, said control method comprising steps of:
a) detecting the occurrence of a predetermined trigger event indicating a predetermined operation of the printer and generating a first save command in response to each detected trigger event;
b) grouping all data that require saving to the nonvolatile memory into a number of data groups, and
c) assigning each data group to a respective pair of corresponding memory areas of said volatile and said nonvolatile memories (3, 5), and
d) saving, in response to said first save command, a first set of data comprising the data of one or more of the memory areas of said volatile memory (3) to the corresponding memory areas (A1-A6) of said nonvolatile memory (5):
**characterized in that**
step a) comprises periodically measuring a predetermined saving period and generating a second save command each time said saving period has lapsed; and
step d) comprises saving, in response to said second save command, a second set of data comprising the data of one or more of said data groups of the memory areas of said volatile memory (3) to the corresponding memory areas of said nonvolatile memory (5), wherein said second set of data includes the data of one or more data groups not included in said first set.

7. The control method as set forth in claim 6, in which the measurement of said predetermined saving period is re-started in response to the second save command having been executed.

8. The control method as set forth in claim 6 or 7, wherein step a) generates said second save command in response to each of a plurality of predetermined trigger events each indicating a different operation of the printer, the trigger events including the detection of a reset signal from a host computer to which the printer (1) is connected, and the printer is reset in response to this reset signal after step d).

9. The control method as set forth in claim 8, wherein said trigger events include turning the power to the printer on or off.

10. The control method as set forth in claim 8 or 9, wherein said trigger events include print head cleaning.

11. The control method as set forth in any one of claims 6 to 10 for saving data in a printer as defined in claim 3, wherein the control method further comprises the step of:
e) computing an error detection code based on the data of a data group, comparing the computed error detection code with that one stored in an associated checksum area and indicating a data error if the compared error detection codes are different.

12. The control method as set forth in claim 11, wherein step e) is executed to detect an error in the data of a memory area (A1-A6) read from the nonvolatile memory (5) during execution of step d).

13. The control method as set forth in claim 6, wherein step e) is executed to detect an error of a data area group after the data group is saved to the nonvolatile memory (5) in step d).

14. The control method as set forth in any one of claims 11 to 13, further comprising a step of:
(f) writing specific initialization data into the concerned pair of corresponding memory areas (A1-A6) in the volatile and the nonvolatile memories (3, 5) when a data error is indicated in step e).

15. The control method as set forth in any one of claims 6 to 14 for saving data in a printer as defined in claim 4, wherein step d) comprises:
d1) scanning the subareas (A5A - A5N) of the nonvolatile memory (5) and finding a pair of a first one and a second one of two successive subareas for which the absolute difference between the values represented by the respective sequence data is higher than that of a predetermined positive or negative incremental value, thereby to identify said first subarea as the one among the subareas of said at least one memory area (A5) that holds the most recent data,
d2) reading the sequence data stored in the sequence area in said first subarea and adding said incremental value to the read sequence data so as to obtain updated sequence data, and
d3) writing the data group (A5) corresponding to said at least one memory area (A5) into the data area and said updated sequence data into the sequence area of said second subarea.

## Patentansprüche

1. Drucker, aufweisend:
eine nichtflüchtige Speichereinrichtung (5), die eine Vielzahl von Speicherbereichen (A1-A6) hat;
eine flüchtige Speichereinrichtung (3), die eine Vielzahl von Speicherbereichen (A1-A6) hat, von denen jeder einem jeweiligen der Vielzahl von Speicherbereichen des nichtflüchtigen Speichers entspricht;
eine Steuerungseinrichtung (56), die das Auftreten eines vorherbestimmten Auslöseereignisses, das einen vorherbestimmten Betrieb des Druckers anzeigt, feststellt, um einen ersten Sicherungsbefehl als Reaktion auf jedes erfaßte Auslöseereignis zu erzeugen; und
eine Sicherungseinrichtung (51, 52, 54), die eine erste Lese/Schreibeinrichtung (52) aufweist, welche auf den ersten Sicherungsbefehl anspricht, um einen ersten Satz Daten, der die Daten eines oder mehrerer der Speicherbereiche (A1-A6) des flüchtigen Speichers (3) aufweist, in den entsprechenden Speicherbereichen (A1-A6) des nichtflüchtigen Speichers (5) zu sichern;
**dadurch gekennzeichnet, daß**
die Steuerungseinrichtung einen Zähler (7) zum periodischen Zählen einer vorherbestimmten Sicherungsperiode und eine Einrichtung aufweist, die in Abhängigkeit davon, daß der Zähler die Sicherungsperiode gezählt hat, einen zweiten Sicherungsbefehl erzeugt, und
die Sicherungseinrichtung eine zweite Lese/Schreibeinrichtung (51) aufweist, die auf den zweiten Sicherungsbefehl anspricht, um einen zweiten Satz Daten, welche die Daten eines oder mehrerer der Speicherbereiche (A1-A6) des flüchtigen Speichers (3) aufweisen, in den entsprechenden Speicherbereichen (A1-A6) des nichtflüchtigen Speichers (5) sichert, wobei der zweite Satz Daten die Daten eines oder mehrerer Speicherbereiche umfaßt, die im ersten Satz nicht eingeschlossen sind.

2. Drucker nach Anspruch 1, ferner mit einer Initialisierungseinrichtung zum Initialisieren des Zählers (7) als Reaktion auf die Sicherung mittels der zweiten Lese/ Schreibeinrichtung (51).

3. Drucker nach Anspruch 1 oder 2, bei dem jeder Speicherbereich (A1-A6) einen Datenbereich zum Speichern von die Druckerbetriebsbedingungen wiedergebenden Daten sowie einen Prüfsummenbereich zum Speichern eines Fehlererkennungscodes aufweist.

4. Drucker nach einem der Ansprüche 1 bis 3, bei dem mindestens einer (A5) der Vielzahl von Speicherbereichen (A1-A6) des nichtflüchtigen Speichers (5) in eine Vielzahl von Teilbereichen (A5A-A5N) unterteilt ist, wobei jeder Teilbereich einen Datenbereich zum Speichern von Daten, die Druckerbetriebsbedingungen wiedergeben, und einen Sequenzbereich zum Speichern von Sequenzdaten aufweist, welche die Sequenz der Benutzung der Teilbereiche wiedergeben.

5. Drucker nach Anspruch 4, bei dem jeder Teilbereich (A5A-A5N) ferner einen Prüfsummenbereich zum Speichern eines Fehlererkennungscodes aufweist.

6. Steuerungsverfahren zum Sichern von Daten aus einem flüchtigen Speicher (3) in einen nichtflüchtigen Speicher (5) in einem Drucker (1), bei dem der nichtflüchtige Speicher (5) eine Vielzahl von Speicherbereichen (A1-A6) und der flüchtige Speicher (3) eine Vielzahl von Speicherbereichen (A1-A6) hat, wobei jeder der vielen Speicherbereiche des flüchtigen Speichers einem jeweiligen der vielen Speicherbereiche des nichtflüchtigen Speichers entspricht, und das Steuerungsverfahren folgende Schritte aufweist:
a) Erfassen des Auftretens eines vorherbestimmten Auslöseereignisses, welches einen vorherbestimmten Betrieb des Druckers anzeigt, und Erzeugen eines ersten Sicherungsbefehls als Reaktion auf jedes erfaßte Auslöseereignis;
b) Gruppieren aller Daten, die im nichtflüchtigen Speicher gespeichert werden müssen, in eine Anzahl von Datengruppen, und
c) Zuweisen jeder Datengruppe zu einem jeweiligen Paar entsprechender Speicherbereiche des flüchtigen und des nichtflüchtigen Speichers (3, 5), und
d) Sichern eines ersten Satzes Daten, der die Daten eines oder mehrerer der Speicherbereiche des flüchtigen Speichers (3) aufweist, in den entsprechenden Speicherbereichen (A1-A6) des nichtflüchtigen Speichers (5) als Reaktion auf den ersten Sicherungsbefehl;
**dadurch gekennzeichnet, daß**
Schritt a) aufweist, eine vorherbestimmte Sicherungsperiode periodisch zu messen und immer dann einen zweiten Sicherungsbefehl zu erzeugen, wenn die Sicherungsperiode abgelaufen ist; und
Schritt d) aufweist, als Reaktion auf den zweiten Sicherungsbefehl einen zweiten Satz Daten zu sichern, der die Daten eines oder mehrerer der Datengruppen der Speicherbereiche des flüchtigen Speichers (3) aufweist, in den entsprechenden Speicherbereichen des nichtflüchtigen Speichers (5), wobei der zweite Satz Daten die Daten einer oder mehrerer Datengruppen umfaßt, die im ersten Satz nicht eingeschlossen sind.

7. Steuerungsverfahren nach Anspruch 6, bei dem das Messen der vorherbestimmten Sicherungsperiode als Reaktion auf die Ausführung des zweiten Sicherungsbefehls neu begonnen wird.

8. Steuerungsverfahren nach Anspruch 6 oder 7, bei dem Schritt a) den zweiten Sicherungsbefehl als Reaktion auf jedes einer Vielzahl vorherbestimmter Auslöseereignisse erzeugt, die je einen unterschiedlichen Betrieb des Druckers anzeigen, wobei die Auslöseereignisse die Erfassung eines Rücksetzsignals von einem Zentralrechner umfassen, mit dem der Drucker (1) verbunden ist, und wobei der Drucker als Reaktion auf dieses Rücksetzsignal nach dem Schritt d) zurückgesetzt wird.

9. Steuerungsverfahren nach Anspruch 8, bei dem die Auslöseereignisse das Ein- oder Ausschalten der Stromversorgung des Druckers umfassen.

10. Steuerungsverfahren nach Anspruch 8 oder 9, bei dem die Auslöseereignisse das Reinigen des Druckkopfes umfassen.

11. Steuerungsverfahren nach einem der Ansprüche 6 bis 10 zum Sichern von Daten in einem Drucker nach Anspruch 3, bei dem das Steuerungsverfahren ferner den Schritt aufweist:
e) Berechnen eines Fehlererkennungscode auf der Grundlage der Daten einer Datengruppe, Vergleichen des berechneten Fehlererkennungscodes mit demjenigen, der in einem zugehörigen Prüfsummenbereich gespeichert ist, und Anzeigen eines Datenfehlers, wenn die verglichenen Fehlererkennungscodes sich unterscheiden.

12. Steuerungsverfahren nach Anspruch 11, bei dem der Schritt e) ausgeführt wird, um einen Fehler in den Daten eines Speicherbereichs (A1-A6) zu erfassen, die aus dem nichtflüchtigen Speicher (5) während der Ausführung des Schritts d) gelesen wurden.

13. Steuerungsverfahren nach Anspruch 6, bei dem der Schritt e) ausgeführt wird, um einen Fehler einer Datenbereichsgruppe zu erfassen, nachdem die Datengruppe im Schritt d) im nichtflüchtigen Speicher (5) gesichert wurde.

14. Steuerungsverfahren nach einem der Ansprüche 11 bis 13, ferner mit einem Schritt f): Schreiben spezifischer Initialisierungsdaten in das betroffene Paar entsprechender Speicherbereiche (A1-A6) im flüchtigen und nichtflüchtigen Speicher (3, 5), wenn ein Datenfehler im Schritt e) angezeigt wird.

15. Steuerungsverfahren nach einem der Ansprüche 6 bis 14 zum Sichern von Daten in einem Drucker nach Anspruch 4, bei dem der Schritt d) aufweist:
d1) Abtasten der Teilbereiche (A5A-A5N) des nichtflüchtigen Speichers (5) und Finden eines Paares aus einem ersten und einem zweiten von zwei aufeinanderfolgenden Teilbereichen, für die die absolute Differenz zwischen den Werten, die von den jeweiligen Sequenzdaten wiedergegeben werden, größer ist als die eines vorherbestimmten positiven oder negativen Inkrementwertes, um dadurch den ersten Teilbereich als denjenigen unter den Teilbereichen des mindestens einen Speicherbereichs (A5) zu identifizieren, der die neuesten Daten hält,
d2) Lesen der in dem Sequenzbereich im ersten Teilbereich gespeicherten Sequenzdaten und Hinzufügen des Inkrementwertes zu den gelesenen Sequenzdaten, um aktualisierte Sequenzdaten zu erhalten, und
d3) Schreiben der dem mindestens einen Speicherbereich (A5) entsprechenden Datengruppe (A5) in den Datenbereich und der aktualisierten Sequenzdaten in den Sequehzbereich des zweiten Teilbereichs.

## Revendications

1. Imprimante comprenant :
un moyen (5) formant mémoire non volatile ayant une pluralité de zones (A1-A6) de mémoire ;
un moyen (3) formant mémoire volatile ayant une pluralité de zones (A1-A6) de mémoire, chaque zone de la pluralité de zones de mémoire de la mémoire volatile correspondant à l'une respective des zones de la pluralité de zones de mémoire de la mémoire non volatile ;
un moyen (56) de contrôle pour détecter l'apparition d'un événement déclencheur prédéterminé indiquant une opération prédéterminée de l'imprimante, pour générer une première commande de sauvegarde en réponse à chaque événement déclencheur détecté ; et
des moyens (51, 52, 54) de sauvegarde comprenant un premier moyen (52) de lecture / écriture sensible à la première commande de sauvegarde pour sauvegarder un premier ensemble de données comprenant les données d'une ou plusieurs des zones (A1-A6) de mémoire de la mémoire (3) volatile dans les zones (A1-A6) correspondantes de mémoire de la mémoire (5) non volatile ;
**caractérisée en ce que**
le moyen de contrôle comprend un compteur (7) pour compter périodiquement une durée prédéterminée de sauvegarde, et un moyen pour générer une deuxième commande de sauvegarde en réponse au fait que le compteur a compté la durée prédéterminée de sauvegarde, et
le moyen de sauvegarde comprend un deuxième moyen (51) de lecture / écriture sensible à la deuxième commande de sauvegarde pour sauvegarder un deuxième ensemble de données comprenant les données d'une ou plusieurs des zones (A1-A6) de mémoire de la mémoire (3) volatile dans les zones (A1-A6) correspondantes de mémoire de la mémoire (5) non volatile, le deuxième ensemble de données comprenant les données d'une ou plusieurs des zones de mémoire non incluses dans le premier ensemble.

2. Imprimante selon la revendication 1, comprenant en outre un moyen d'initialisation pour remettre à zéro le compteur (7) en réponse à la sauvegarde effectuée par le deuxième moyen (51) de lecture / écriture.

3. Imprimante selon la revendication 1 ou 2, dans laquelle chaque zone (A1-A6) de mémoire comprend une zone de données pour stocker les données représentant les conditions de fonctionnement de l'imprimante, et une zone de somme de contrôle pour stocker un code de détection d'erreur.

4. Imprimante selon l'une quelconque des revendications 1 à 3, dans laquelle au moins une zone (A5) de la pluralité de zones (A1-A6) de mémoire de la mémoire (5) non volatile est divisée en une pluralité de zones (A5A - A5N) secondaires, chaque zone secondaire comprenant une zone de données pour stocker des données représentant les conditions de fonctionnement de l'imprimante et une zone de séquence pour stocker des données de séquence représentant la séquence d'utilisation des zones secondaires.

5. Imprimante selon la revendication 4, dans laquelle chaque zone (A5A - A5N) secondaire comprend en outre une zone de somme de contrôle pour stocker un code de détection d'erreur.

6. Procédé de commande pour sauvegarder des données d'une mémoire (3) volatile dans une mémoire (5) non volatile dans une imprimante (1), dans lequel le moyen (5) formant mémoire non volatile a une pluralité de zones (A1-A6) de mémoire et le moyen (3) formant mémoire volatile a une pluralité de zones (A1-A6) de mémoire, chaque zone de la pluralité de zones de mémoire de la mémoire volatile correspondant à l'une respective des zones de la pluralité de zones de mémoire de la mémoire non volatile, le procédé de commande comprenant les étapes consistant à :
a) détecter l'apparition d'un événement déclencheur prédéterminé indiquant une opération prédéterminée de l'imprimante et générer une première commande de sauvegarde en réponse à chaque événement déclencheur détecté ;
b) grouper toutes les données qui doivent être sauvegardées dans la mémoire non volatile dans un certain nombre de groupes de données, et
c) attribuer chaque groupe de données à une paire respective de zones correspondantes de mémoire des mémoires (3, 5) volatile et non volatile, et
d) sauvegarder, en réponse à la première commande de sauvegarde, un premier ensemble de données comprenant les données d'une ou plusieurs des zones de mémoire de la mémoire (3) volatile dans les zones (A1-A6) correspondantes de mémoire de la mémoire (5) non volatile ;
**caractérisé en ce que**
l'étape a) comprend une mesure périodique d'une durée prédéterminée de sauvegarde et la génération d'une deuxième commande de sauvegarde chaque fois que la durée de sauvegarde est écoulée ; et
l'étape d) comprend une sauvegarde en réponse à la deuxième commande de sauvegarde, d'un deuxième ensemble de données comprenant les données d'un ou plusieurs des groupes de données des zones de mémoire de la mémoire (3) volatile dans les zones correspondantes de mémoire de la mémoire (5) non volatile, le deuxième ensemble de données comprenant les données d'un ou plusieurs groupes de données non inclus dans le premier ensemble.

7. Procédé de commande selon la revendication 6, dans lequel la mesure de la durée prédéterminée de sauvegarde redémarre en réponse à l'exécution de la deuxième commande de sauvegarde.

8. Procédé de commande selon la revendication 6 ou 7, dans lequel l'étape a) génère la deuxième commande de sauvegarde en réponse à chaque événement déclencheur d'une pluralité d'événements déclencheurs prédéterminés indiquant chacun une opération différente de l'imprimante, les événements déclencheurs comprenant la détection d'un signal de réinitialisation provenant d'un ordinateur hôte auquel l'imprimante (1) est connectée, et l'imprimante est réinitialisée en réponse à ce signal de réinitialisation après l'étape d).

9. Procédé de commande selon la revendication 8, dans lequel les événements déclencheurs comprennent la mise sous ou hors tension de l'imprimante.

10. Procédé de commande selon la revendication 8 ou 9, dans lequel les événements déclencheurs comprennent le nettoyage de la tête d'impression.

11. Procédé de commande selon l'une quelconque des revendications 6 à 10 pour sauvegarder des données dans une imprimante comme celle définie dans la revendication 3, le procédé de commande comprenant en outre l'étape consistant à :
e) calculer un code de détection d'erreur sur la base des données d'un groupe de données, comparer le code calculé de détection d'erreur avec celui enregistré dans une zone associée de somme de contrôle et signaler une erreur de données si les codes de détection d'erreur comparés sont différents.

12. Procédé de commande selon la revendication 11, dans lequel l'étape e) est exécutée pour détecter une erreur dans les données d'une zone (A1-A6) de mémoire lue dans la mémoire (5) non volatile pendant l'exécution de l'étape d).

13. Procédé de commande selon la revendication 6, dans lequel l'étape e) est exécutée pour détecter une erreur dans un groupe de zones de données après que le groupe de données a été sauvegardé dans la mémoire (5) non volatile à l'étape d).

14. Procédé de commande selon l'une quelconque des revendications 11 à 13, comprenant en outre une étape consistant à :
f) écrire des données spécifiques d'initialisation dans la paire concernée de zones (A1-A6) correspondantes de mémoire dans les mémoires (3, 5) volatile et non volatile quand une erreur de données est signalée à l'étape e).

15. Procédé de commande selon l'une quelconque des revendications 6 à 14 pour sauvegarder des données dans une imprimante comme celle définie dans la revendication 4, l'étape d) comprenant :
d1) l'exploration des zones (A5A - A5N) secondaires de la mémoire (5) non volatile et la recherche d'une paire composée d'une première et d'une deuxième des deux zones secondaires successives pour lesquelles la différence absolue entre les valeurs représentées par les données respectives de séquence est supérieure à celle d'une valeur incrémentielle positive ou négative, identifiant ainsi la première zone secondaire comme celle parmi les zones secondaires de ladite au moins une zone (A5) de mémoire qui contient les données les plus récentes,
d2) la lecture des données de séquence enregistrées dans la zone de séquence dans la première zone secondaire et l'ajout de la valeur incrémentielle aux données de séquence lues afin d'obtenir des données de séquence mises à jour, et
d3) l'écriture du groupe (A5) de données correspondant à ladite au moins une zone (A5) de mémoire dans la zone de données et des données de séquence mises à jour dans la zone de séquence de la deuxième zone secondaire.
